# EUROPEAN PATENT SPECIFICATION

(11) **EP 3 073 807 B1**
(45) Date of publication and mention of the grant of the patent: **01.11.2017**
(21) Application number: 15160930.2
(22) Date of filing: 25.03.2015
(51) Int. Cl.: H05B 37/02

(54) **APPARATUS AND METHOD FOR CONTROLLING A LIGHTING SYSTEM**
VORRICHTUNG UND VERFAHREN ZUR STEUERUNG EINES BELEUCHTUNGSSYSTEMS
APPAREIL ET PROCÉDÉ POUR SURVEILLER UN SYSTÈME D'ÉCLAIRAGE

(43) Date of publication of application: 28.09.2016
(73) Proprietor: Digital Lighting S.r.l., 35129 Padova (IT)
(72) Inventor: Tallon, Riccardo, I-31100 Treviso (IT)
(74) Representative: Gallo, Luca

(56) References cited:
- US-A1- 2009 262 189
- US-A1- 2015 076 993

## Description

### Field of application

The present invention regards an apparatus and a method for controlling a lighting system according to the preamble of the relative independent claims.

The present apparatus and method are advantageously employable in the field of illuminating engineering in order to carry out the control and management of a lighting system, in particular of a system of a public lighting network comprising street lamps placed along the roads and in public spaces of a specific geographic area, such as the territory of a municipality or province.

Advantageously, the present apparatus and method are inserted in the field of the development of technologies and infrastructures employable in "smart city" context, in particular so as to optimize the technological innovation in the planning of urban and extra-urban areas.

### State of the art

For some time, apparatuses for controlling a public lighting system have been known, which allow managing in an automated manner the turning on and off of the street lamps of the system.

More in detail, such apparatuses of known type comprise a plurality of electronic control units, each of which connected to the lamp of the corresponding street lamp for controlling the turning on and off thereof and the intensity of the light emitted by the lamp, by means of regulating the supply voltage or current of the lamp itself.

In particular, the apparatus comprises a light sensor mounted on each street lamp in order to detect measurements of the intensity of the environment light and send them to the corresponding control unit, which consequently controls the turning on of the street lamp if the detected measurements are lower than a determined threshold value (as occurs for example at sunset) or it controls the turning off of the street lamp when the detected brightness measurements exceed the aforesaid threshold value (as occurs for example at sunrise).

In addition, multiple video surveillance cameras are provided that are mounted on some street lamps of the lighting system, each of which suitable for filming the area surrounding the corresponding street lamp and for sending the filmed images to the corresponding control unit. The latter is equipped with a communication module by means of which it sends the data containing the images received by the camera to a PC server placed for example in a control centre of the closed circuit monitoring system.

The main drawback of the apparatus of known type briefly described above is due to the fact that it is unable to efficiently control the operation of the street lamps, since each control unit controls the operation of the corresponding street lamp only as a function of the intensity measurements of the environment light received by the light sensor, and it is unable to evaluate the importance of other environmental conditions (such as the passage of people, the intensity of traffic, the presence of accidents, etc.) in order to control the corresponding street lamp to emit light with a suitable intensity.

In particular, such apparatus of known type is unable to use the information detected by the cameras, and relative for example to the presence of vehicles, for controlling the intensity of the light emitted by the street lamps, and therefore such apparatus is suitable for controlling for example the street lamps of a parking area to emit high intensity light in the middle of the night even in the absence of vehicles, with a consequent waste of electrical energy.

Known from the patent US 2012/0286673 is an apparatus for controlling a lighting system, which comprises multiple electronic control units, each of which connected to the light source of the corresponding street lamp in order to control such light source as a function of signals received by environment detection devices, such as an image detection device, a light sensor, a vibration sensor and a device for receiving radio waves.

Nevertheless, also the latter apparatus of known type has in practice shown that it does not lack drawbacks.

In particular, the electronic control units of the apparatus are unable to efficiently process the information sent by the different detection devices, leading for example to a regulation of the light intensity that is unsuitable for the events detected by the detection devices, i.e. allowing the use of signals coming from only a limited number of detection devices. Document US 2009/0262189 discloses a lighting system comprising a video analytics module connected to image sensors and configured for processing the spatio-temporal signal of each sensor to detect moving objects. Furthermore, the lighting system comprises a controller which is connected to the video analytics module and switches on or off the lamps according to information provided by the video analytics module in response to image sensors.

Document US 2015/0076993 discloses a lighting system comprising more sensors connected to a controller, which controls a light intensity controller for regulating the light emitted by a correspondent lamp.

The lighting systems disclosed in US 2009/0262189 and US 2015/0076993 are not able to optimize efficiently the operation of the lamps.

### Presentation of the invention

The main object of the present invention is therefore to overcome the drawbacks manifested by the above-considered solutions of known type by providing an apparatus and a method for controlling a lighting system, which allow managing the operation of the lamps of the system in an entirely efficient manner, and in particular allow appropriately regulating the light emitted by the lamps as a function of a high number of environmental factors.

Further object of the present invention is to provide an apparatus and a method for controlling a lighting system, which allow obtaining high energy savings in the management of the system.

Further object of the present invention is to provide an apparatus and a method for controlling a lighting system, which allow integrating the management of the street lamps with further functions, such as surveillance, traffic monitoring, environment monitoring, Internet access, etc.

Further object of the present invention is to provide an apparatus and a method for controlling a lighting system, which allow managing the operation of the street lamps of the system in a simple and inexpensive manner.

Further object of the present invention is to provide an apparatus for controlling a lighting system which is structurally simple and inexpensive to obtain.

These and still other objects are all achieved by the apparatus and by the method for controlling a lighting system, object of the present invention, according to the below-reported claims.

### Brief description of the drawings

The technical characteristics of the invention, according to the aforesaid objects, can be clearly seen in the contents of the below-reported claims and the advantages thereof will be clearer in the following detailed description, made with reference to the enclosed drawings, which represent a merely exemplifying and non-limiting embodiment of the invention, in which:
- figure 1 shows a block diagram of the apparatus for controlling a lighting system, object of the present invention;
- figure 2 shows a block diagram of a detail of the present apparatus, relative to an integrating block of the data acquired by the detection devices;
- figure 3 shows a block diagram of a detail of the present apparatus, relative to an actuator block and to a communication unit.

### Detailed description

With reference to the enclosed drawings, reference number 1 indicates overall the apparatus for controlling a lighting system, object of the present invention.

The present apparatus 1 is advantageously intended to be used for controlling and managing a lighting system employed in particular in a public lighting network.

Such system comprises a plurality of light sources 2 typically placed on street light lamps, which are installed along the streets and in public spaces (such as parking lots, cycling and walking paths etc.) of a specific geographic area, such as the territory of a municipality or province.

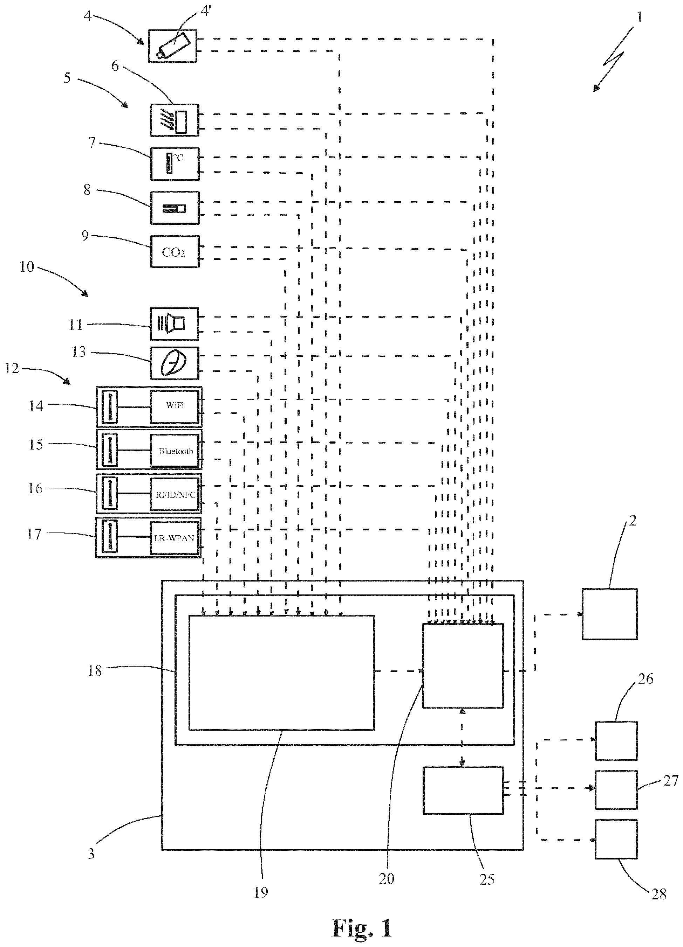

With reference to the exemplifying scheme illustrated in figure 1, the present apparatus 1 comprises at least one control device 3 suitable for being connected to the corresponding light source 2 of the system for controlling the operation of such light source 2. The latter advantageously comprises a lamp (e.g. of LED type, of discharge type, or of halogen type, etc.) drivable by the corresponding control device 3 for illuminating an area beneath and surrounding the street lamp. Of course, without departing from the scope of the present patent, the control device 3 can also be arranged for controlling multiple light sources 2, for example mounted on the same street lamp.

In particular, the control device 3 is advantageously housed within a containment body fixed to the pole of the corresponding street lamp.

The present apparatus 1 also comprises at least one image detection device 4, which is suitable for taking images of the area surrounding the corresponding light source 2, and is operatively connected to the corresponding control device 3 in order to send to the latter first detection signals containing the aforesaid images acquired by the detection device 4 itself.

Advantageously, the image detection device 4 comprises a camera 4', which is intended to be fixed for example to the pole of the street lamp, is preferably connected via cable to the corresponding control device 3 and is suitable for sending to the latter the first detection signals containing image frames which, in particular, allow detecting the presence and/or passage of people and things, detecting visual details such as vehicle license plates, faces of people, colours, etc.

In addition, the apparatus 1 comprises at least one environment detection device 5 selected from a first family of devices comprising one or more of the following devices: a light sensor 6, a temperature sensor 7, a humidity sensor 8, a CO₂ sensor 9.

More in detail, each aforesaid environment detection device 5 is suitable for detecting measurements of environmental parameters of the area surrounding the light source 2, and is operatively connected to the control device 3 in order to send to the latter corresponding second detection signals containing the detected measurements.

In particular, the light sensor 6 is suitable for detecting measurements of the intensity of the environment light and for sending, to the control device 3, second detection signals containing the aforesaid intensity measurements, from which the control device 3 obtains information on the solar brightness and advantageously on the weather conditions.

The temperature sensor 7, the humidity sensor 8 and the CO₂ sensor 9 are suitable for sending, to the control device 3, corresponding second detection signals respectively containing measurements of the temperature of the air surrounding the light source 2, measurements of the humidity level and measurements of the air CO₂ concentration. From such second detection signals, the control device 3 obtains information on the variation of environmental parameters which it integrates with the information provided by the camera 4' and by the light sensor 6 in order to control the operation of the light source 2, i.e. advantageously in order to provide information on the video surveillance, on the traffic, on the weather conditions, on the pollution, etc., as will be described in detail hereinbelow. The apparatus 1 according to the invention also comprises at least one presence detection device 10 selected from a second family of devices comprising one or more of the following devices: a vibration sensor 11, a device for receiving radio waves 12, a radar 13. More in detail, each presence detection device 10 is suitable for detecting the presence of at least one object (such as people, vehicles, bicycles, etc.) in the area surrounding the light source 2, and is operatively connected to the corresponding control device 3 in order to send to the latter third detection signals indicative of the detected presence. Advantageously, the vibration sensor 11 (comprising preferably an accelerometer) is suitable for detecting measurements of vibrations of the air and of the ground indicative of the passage of vehicles in the area surrounding the light source 2, and is suitable for sending, to the corresponding control device 3, third detection signals containing such measurements, from which the control device 3 obtains - integrating them with the first and second signals sent by the camera 4' and by the environment detection devices 5 - indications relative to the identification of the moving vehicles or the onset of traffic accidents.

Advantageously, the radio wave reception devices 12 are selected from a third family of devices comprising one or more of the following devices: a WiFi receiving device 14, a Bluetooth receiving device 15, a RFID/NFC receiving device 16, a LR-WPAN receiving device 17.

Advantageously, each aforesaid device for receiving radio waves 12 comprises its own transceiver module, in particular equipped with an antenna, and suitable for detecting radio signals emitted by electronic devices that are situated in the area surrounding the corresponding light source 2 and to convert them into corresponding electrical signals.

In addition, each device for receiving radio waves 12 comprises its own interface module, preferably obtained with an electronic circuit board, operatively connected to the corresponding transceiver module in order to receive the aforesaid electrical signals and adapted to encode the latter in order to provide the corresponding third detection signals containing identification information of the electronic device that emitted the detected radio signals.

In particular, advantageously, the WiFi receiving device 14 is equipped with a WiFi interface module suitable for encoding the electrical signals provided by the corresponding transceiver module in order to identify the radio signals emitted by electronic devices (such as tablets, netbooks, smartphones, etc.) which transmit communication signals with protocol 802.11.

Preferably, the WiFi receiving device 14 is connected to a communication network (such as the Internet) and is suitable for sending and receiving radio signals by means of its own transceiver module in order to communicate with devices equipped with WiFi cards (such as tablets, netbooks, smartphones, etc.) so as to allow the access of such devices to the communication network, thus obtaining for example a HotSpot for the access to an Internet connection.

Advantageously, the Bluetooth reception device 15 is equipped with a Bluetooth interface module suitable for encoding electrical signals provided by the corresponding transceiver module in order to identify the radio signals emitted by electronic devices that transmit communication signals with the Bluetooth data transmission standard (such as tablets, netbooks, smartphones, etc.) so as to carry out the tracking of people and/or vehicles.

In particular, since electronic devices equipped with Bluetooth are normally mounted in recently-produced vehicles, the third detection signals provided by the interface module of the Bluetooth reception device 15 allow the control device 3 to carry out the identification and tracking of vehicles by providing information on the presence of vehicles as well as on the traffic flow conditions. In addition, the third detection signals provided by the Bluetooth reception device 15 are used by the control device 3, together with the detection signals provided by the WiFi receiving device 14, for the identification of devices provided both with Bluetooth and with WiFi.

Preferably, the Bluetooth reception device 15 is drivable by the corresponding control device 3 to transmit, by means of its own transceiver module, radio signals to electronic devices equipped with Bluetooth (such as information displays arranged along the roads) in order to send information to the latter relative to the traffic conditions, for example. Advantageously, the RFID/NFC receiving device 16 is equipped with an RFID/NFC interface module suitable for encoding the electrical signals provided by the corresponding transceiver module in order to identify the radio signals emitted by TAGs (or transponders) programmed for transmitting the data contained therein by means of the RFID or NFC standard. The third detection signals provided by the RFID/NFC receiving device 16 allow the control device 3 to identify the presence and movement of people and/or objects equipped with TAGs, such as bracelets for tracking children, trash cans, etc. Advantageously, the LR-WPAN receiving device 17 comprises an interface module equipped with IEEE 802.15.4 standard suitable for encoding the electrical signals provided by the corresponding transceiver module in order to identify the radio signals emitted by electronic devices (such as control devices used in home automation) that transmit communication signals by means of the IEEE 802.15.4 standard.

In addition, advantageously, the LR-WPAN 17 reception device allows the corresponding control device 3 to identify the presence and movement of identification devices mounted on objects or vehicles in order to carry out for example the tracking of trash bins, of bicycles of a bike sharing of a city, etc.

Preferably, the LR-WPAN receiving device 17 can be driven by the corresponding control device 3 to send, by means of its own transceiver module, radio signals to the electronic devices equipped with communication cards with 802.15.4 standard, so as to send, to such devices, control instructions coming from operating centres connected to the control device 3 itself by means of a communication network with IEEE 802.15.4 standard constituted by the LR-WPAN receiving devices 17 of the present apparatus 1.

Advantageously, the radar 13 is suitable for detecting the presence and the movement of people or vehicles, also in conditions of poor visibility (e.g. in the presence of fog, at night, etc.), providing the corresponding control device 3 with third detection signals which also contain information relative to the size and speed of the detected objects.

The control device 3 is suitable for receiving the detection signals (sent by the detection devices 4, 5, 10) and as a function of their content controls the operation of the corresponding light source 2, i.e. advantageously transmits information to remote units in order to implement further functions and/or services such as the sending of signals to video surveillance centres, i.e. the sending of information regarding traffic and environmental parameters to data collection centres, etc.

In accordance with the idea underlying the present invention, each control device 3 of the apparatus 1 comprises at least one electronic processing unit 18, preferably provided with a CPU, and equipped with an integrating block 19, which is suitable for receiving in input the first, second and third detection signals (respectively sent by the detection devices 4, 5 and 10), and is suitable for providing in output corresponding control data.

The electronic processing unit 18 is also equipped with an actuator block 20, which is suitable for receiving the aforesaid control data from the integrating block 19 and is suitable for sending, to the light source 2, corresponding control signals of the supply voltage and/or current of such light source 2 in order to control the operation thereof.

In particular, as described in detail hereinbelow, the integrating block 19 processes the detection signals received by the detection devices 4, 5, and 10, obtaining higher level information (such as statistics on the traffic conditions, information on the vehicles and on the people who pass in proximity to the light source 2, indications for the tracking of objects or people, weather conditions, identification of accidents, etc.) given from the integration of the information contained in the detection signals, and uses such higher level information for providing the control data to the actuator block 20, which consequently controls the light source 2 for the purpose of adjusting the light emitted by the latter.

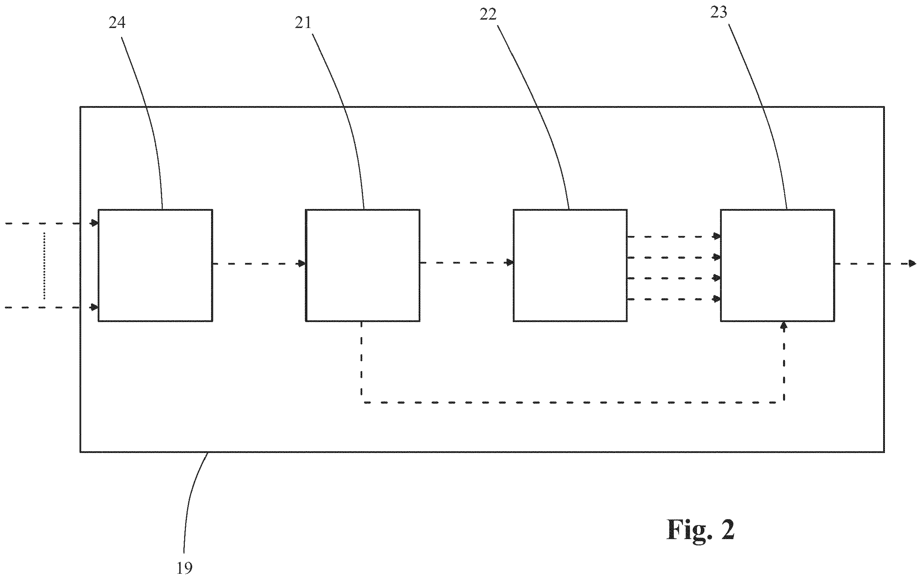

With reference to the embodiment illustrated in figure 2, the integrating block 19 comprises a validating module 21, which is suitable for receiving the aforesaid first, second and third detection signals (sent by the detection devices 4, 5 and 10), it calculates correlation indices between two or more of such detection signals, compares the correlation indices with a determined threshold correlation value, and selects a first group of the detection signals having correlation index higher than the aforesaid threshold correlation value. Advantageously, the aforesaid correlation indices are calculated by the validating module 21 by using techniques of statistical calculation known to the man skilled in the art (such as the calculation of the linear correlation coefficient) or otherwise by means of heuristic rules which compare the progression of the signals during the same time intervals.

In this manner, the validating module 21 analyzes the correlations and the coherence between the detection signals received by the detection devices 4, 5 and 10, so as to identify the first group of coherent, correlated and significant signals to send to a combining module 22 of the integrating block 19.

The combining module 22 is suitable for receiving the aforesaid first group of the detection signals from the validating module 21, and is suitable for dividing the detection signals of such first group into classes indicative of the verification of specific corresponding events. The combining module 22 is thus suitable for providing identification data corresponding to the events of the identified classes.

In substance, the combining module 22 processes the detection signals of the first group, preferably by means of unsupervised classification methods, and provides in output the aforesaid identification data containing high-level information preferably accompanied by a degree of probability of the identified event, such as the probability of presence of intense traffic, the probability that there has been an accident, the probability that the identified object is a vehicle, a pedestrian or a cyclist, the probability that there is fog, ice or other irregular atmospheric conditions, etc.

In addition, the integrating block 19 comprises a controller module 23, which is suitable for receiving the aforesaid identification data from the combining module 22, and for providing the actuator block 20 with the control data corresponding to such identification data, in a manner such that the actuator block 20 regulates the light emitted by the light source as a function of the event indicated by the identification data.

Advantageously, the validating module 21 is suitable for selecting from among the detection signals (received by the detection devices 4, 5 and 10) a second group of signals having correlation index lower than the aforesaid threshold value, and sending such second group of signals to the controller module 23, which is suitable for analyzing the second group of signals to enable the sending of the control data to the actuator block 20. Therefore, the controller module 23 receives in input the identification data containing the high-level information coming from the combining module 22, and also advantageously receives the second group of the detection signals sent by the validating module 21, processes such data and signals preferably by means of unsupervised classification methods, and provides, in output to the actuator block 20, the control data containing the instructions for controlling the light source 2.

Advantageously, the integrating block 19 comprises a pre-processing module 24, which is suitable for receiving the detection signals (from the detection devices 4, 5 and 10) and is suitable for providing in output such signals in transformed form containing information indicative of the detections carried out by the camera 4', by the environment detection devices 5 and by the presence detection devices 10.

The present apparatus 1 will be described hereinbelow in a particular operative condition that is entirely exemplifying and non-limiting of the protection of the present patent.

In such exemplifying operation condition, a cyclist equipped with a mobile telephone device passes into the area surrounding the light source 2.

The validating module 21 of the integrating block 19 receives in input first detection signals sent by the camera 4' which contain frames in which the presence of a moving object is detected, second detection signals sent by the light sensor 6 which contain measurements of the intensity of the environment light, third detection signals coming from the WiFi receiving device 14 relative to radio signals emitted by the mobile telephone device of the cyclist, and further third detection signals sent by the vibration sensor 11 which detected low frequency vibrations due to the passage of the cyclist.

Advantageously, the first detection signals sent by the camera 4' are received by the pre-processing module 24 which processes them and provides, in output to the validating module 21, such first signals in transformed form containing the indication of the presence of a moving object.

The validating module 21 correlates the detection signals sent by the camera 4', by the light sensor 6, by the vibration sensor 11 and by the WiFi receiving device 14, calculating the correlation indices between such signals, and compares such indices with the threshold correlation value.

The validating module 21 detects that the correlation indices between the detection signals sent by the camera 4', by the vibration sensor 11 and by the WiFi receiving device 14 are greater than the threshold correlation value, and therefore the validating module 21 selects such signals from the first group, sending them to the combining module 22, since the aforesaid correlation indices (greater than the threshold value) show a relation between the variations of the corresponding signals caused by the passage of the cyclist.

The validating module 21 also detects that the correlation indices between the second detection signals sent by the light sensor 6 and the other detection signals (sent by the camera 4', vibration sensor 11 and WiFi receiving device 14) are lower than the threshold correlation value, since the measurements of the brightness do not present variations tied to the progression of such other detection signals. Hence, the validating module 21 selects the second detection signals coming from the light sensor 6 in the second group, without sending them therefore to the combining module 22.

The combining module 22 divides the first group of signals received from the validating module 21 into classes identifying the detected event (passage of the cyclist), and provides identification data of the event which indicate that: there is the passage of an object with 95% probability (due to the signals of the camera 4'); this is a pedestrian or cyclist with 80% probability (due to the signals of the WiFi receiving device 14 relative to the detection of an electronic device with WiFi and to the time for which the radio signals emitted by the latter are detected, and to the fact that the low frequency of the measurements of vibrations detected by the vibration sensor 11 does not justify the passage of an automobile); the probability that there is an accident is 5% (since no indication in such sense was detected by the camera 4' and by the vibration sensor 11); the probability that there is wind is 70% (given the low frequency of the vibrations detected by the vibration sensor 11). The combining module 22 provides this identification data to the controller module 23. The latter, on the basis of the information of the identified object type (pedestrian or cyclist in this case) contained in the identification data, decides to provide the actuator block 20 with control data containing instructions for controlling the light source 2 to increase the light emitted towards the cycling/walking path.

In order to decide if it is to actually send such control data to the actuator block 20, the controller module 23 uses the second signals relative to the environment brightness sent by the validating module 21, comparing such signals with a determined brightness threshold value indicative of the presence of diurnal sunlight. If the controller module 23 detects that the second brightness detection signals are lower than such threshold (as can occur in the evening), the controller module 23 provides the control data in order to increase the intensity of light emitted by the light source 2, otherwise it does not send such control data to the actuator block 20 since the sunlight is sufficient to illuminate the cycling/walking path.

Advantageously, the actuator block 20 is suitable for receiving the detection signals from the corresponding detection devices 4, 5 and 10 and processes them to parameterize the control data received by the controller module 23 of the integrating block 19.

In accordance with the above-discussed exemplifying operation condition, the actuator block 20, if it receives the control data from the controller module 23 in order to control the increase of the light intensity of the light source 2, it compares the brightness measurements of the second detection signals sent by the light sensor 6 with determined control parameters in order to decide the amount of intensity increase of the light emitted by the light source 2.

Advantageously, the actuator block 20 regulates the brightness of the light emitted by the light source 2 by sending the control signals to a supply circuit, which is suitable for controlling the electric current provided to the light source 2 by means of corresponding supply signals. Preferably, in accordance with a particular embodiment in which the light source 2 comprises lamps of LED type, the supply circuit is suitable for supplying the LEDs of the light source 2 by means of corresponding PWM supply signals, or by means of supply signals encoded with DALI protocol, or by means of DC supply signals variably between 0-10V.

Advantageously, each control device 3 of the apparatus 1, object of the present invention, comprises a communication unit 25 connected to the electronic processing unit 18 and suitable for receiving the aforesaid detection signals and the aforesaid identification data from the latter and for sending them to at least one remote unit 26, 27, 28. Advantageously, the communication unit 25 is connected to the actuator block 20, which is programmed in order to send control signals to the communication unit 25, in order to send to a first remote unit 26, in particular placed in a surveillance centre, the first detection signals acquired by the camera 4', the identification data of an event tied to the passage of people and vehicles, or to the verification of accidents. In this manner, advantageously, the present apparatus 1 allows automatically generating signals to the surveillance centre relative for example to the onset of accidents, to the presence of suspicious objects left in public places, to the identification of vehicle license plates, to the identification of people, to tracking the movement of people or vehicles, etc.

Preferably, the actuator block 20 is suitable for providing control signals to the communication unit 25 in order to send to a second remote unit 27, comprising preferably a PC server with an archive memory, detection signals and identification data containing information regarding local traffic, environmental parameters (e.g. temperature maps, noise maps, etc.), statistics for regulating the traffic lights based on the traffic, management of the parking areas, management of the trash collection, etc.

Advantageously, the communication unit 25 is suitable for receiving from a third remote unit 28 (in particular constituted by a central unit for managing the lighting system) management data containing preferably operation parameters of the light source, set up parameters, etc.

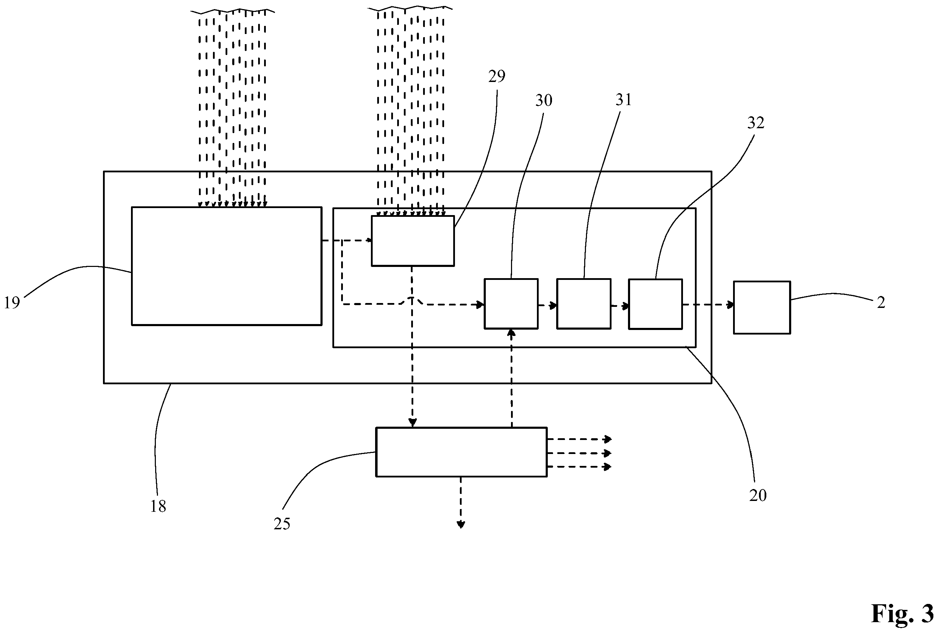

Of course, without departing from the protective scope of the present patent, the apparatus 1 can also comprise more than three remote units, or it can comprise only one remote unit suitable for completing the functions of the aforesaid remote units 26, 27, 28. Advantageously, the communication unit 25 is equipped with a Mesh interface module, which preferably supports a 802.11s communication protocol, and by means of which the corresponding control device 3 communicates with the other control devices 3 of the apparatus 1 connected to the other corresponding light sources 2 of the lighting system. With reference to the embodiment illustrated in figure 3, the actuator block 20 of each control device 3 is equipped with a transmission module 29, which is suitable for receiving the control data from the integrating block 19 and the detection signals from the detection devices 4, 5, 10, and is suitable for sending corresponding first control data to the communication unit 25 of the corresponding control device 3.

The communication unit 25 of the control device 3, by means of its Mesh interface module, is suitable for sending transmission signals (corresponding to the aforesaid first control data) to the communication units 25 of other control devices 3 of the apparatus 1 (arranged in particular in an area surrounding the control device 3 from which the transmission signals are sent).

In particular, the first control data, emitted by the transmission module 29 of the actuator block 20, and the corresponding transmission signals, sent by the control unit 25 of each control device 3, contain information identifying events identified by the detection devices 4, 5, 10 (relative for example to the passage of a person or a vehicle, or to the verification of an emergency situation, such as a road accident, a fire in a covered parking area, etc.) and intended to be employed by the other control devices 3 of the apparatus 1 for suitably controlling the corresponding light sources 2, as described in detail hereinbelow. Advantageously, the communication unit 25 of each control device 3 is suitable for receiving the aforesaid transmission signals sent by the communication units 25 of other control devices 3, and for sending, to the actuator block 20 of the respective control device 3, corresponding second control data (containing the information carried by the transmission signals themselves).

The actuator block 20 of each control device 3 is equipped with an identifier module 30, which is suitable for receiving the control data from the respective integrating block 19 and the second control data from the respective communication unit 25, and is suitable for associating corresponding priority levels to such control data and to such second control data. For example, the identifier module 30 is arranged for associating a higher priority level to data relative to emergency situations than to data relative to normal environmental situations (such as the light intensity of the outside environment).

In addition, the actuator block 20 is equipped with a selector module 31 arranged for selecting, from the aforesaid control data and second control data, at least one group of data having the highest priority level, such as data relative to emergency situations.

The actuator block 20 is also equipped with a control module 32 suitable for receiving the aforesaid group of data selected by the selector module 31, and for sending, to the respective light source 2, corresponding control signals for regulating the operation of the light source 2 itself as a function of the events identified from the selected group of data. For example, in operation, if one of the control devices 3 of the apparatus 1 receives from the respective detection devices 4, 5, 10 information relative to the verification of an emergency event (such as a fire or a road accident), such control device 3 sends, by means of the respective communication unit 25, transmission signals identifying the emergency event to other control devices 3 (for example positioned nearby).

Each of such other control devices 3 receives the aforesaid transmission signals by means of the respective communication unit 25, which consequently sends corresponding second control data to the identifier module 30 of the respective actuator block 20; such identifier module 30 associates, with this second control data, a higher priority level than for example the control data coming from the integrating block 19 of the corresponding control device 3.

Consequently, the selector module 31 selects the aforesaid second control data relative to the emergency event, in a manner such that the control module 32 sends control signals to the corresponding light source 2 that are suitable for controlling the turning on of the latter with maximum intensity, or even flashing.

Also forming an object of the present invention is a method for controlling a lighting system, in particular obtained by means of the apparatus 1 of the above-described type.

Hereinbelow, for the sake of description simplicity reference will be made to the same nomenclature introduced thus far, even if it must be intended that the present method can also be obtained with apparatuses that are not provided with all the above-considered characteristics.

The method for controlling a lighting system according to the present invention comprises:
- a first step of acquiring first image detection signals, carried out by means of the image detection device 4, whose camera 4' preferably films the area surrounding the corresponding light source 2;
- a second step of acquiring second detection signals of measurements of environmental parameters of the area surrounding the light source 2, carried out by means of the environment detection devices 5, which as stated above comprise at least one from among: the light sensor 6, the temperature sensor 7, the humidity sensor 8 and the CO₂ sensor 9;
- a third step of acquiring third detection signals of the presence of at least one object, carried out by means of the presence detection devices 10, which as stated above comprise at least one from among: the vibration sensor 11, the radar 13, the radio wave reception devices 12 (such as in particular the WiFi receiving device 14, the Bluetooth receiving device 15, the RFID/NFC receiving device 16 and the LR-WPAN receiving device 17).

In accordance with the idea underlying the present invention, the present method also comprises a step of integrating the aforesaid first, second and third detection signals, carried out by means of the integrating block 19 of the control device 3, such integrating block 19 receiving in input such first, second and third detection data, and providing in output the corresponding control data to send to the actuator block 20.

Advantageously, the integration step comprises a stage of pre-processing the detection signals, carried out by means of the pre-processing module 24, which provides in output such signals in transformed form containing information indicative of the detections carried out by the detection devices 4, 5 and 10.

According to the invention, the aforesaid integration step comprises a stage of calculating the correlation indices between two or more of the aforesaid first, second and third detection signals (acquired by the detection devices 4, 5, 10), a stage of comparing such correlation indices with at least one determined threshold correlation value, and a stage of selecting a first group of the detection signals having correlation index higher than the threshold value. Such calculation, comparison and selection stages are carried out by means of the validating module 21 of the integrating block 19.

Advantageously, the integration step of the present method comprises a second stage of selecting a second group of the detection signals having correlation index lower than the aforesaid threshold value, and which are provided by the validating module 21 to the controller module 23 which uses them to enable the sending of the control data to the actuator block 20, as described in detail hereinbelow.

Advantageously, the first and the second selection stage are obtained by means of unsupervised classification methods.

The integration step also comprises a stage of dividing the detection signals of the first group into classes indicative of the verification of specific corresponding events (such as the passage of pedestrians or vehicles, the decrease of environment brightness, the onset of a traffic accident, etc.), such division stage being carried out by means of the combining module 22 of the integrating block 19.

The integration step then comprises a stage of generating the identification data corresponding to the aforesaid events, such stage carried out by the combining module 22 which sends such identification data to the controller module 23.

The integration step then comprises a stage of generating the control data corresponding to the identification data, carried out by the controller module 23, which provides the actuator block 20 with the control data containing the instructions for regulating the light emitted by the light source 2 as a function of the events identified in the aforesaid division stage. Advantageously, in the stage of generating the control data, the controller module 23 receives, from the validating module 21, the second group of the detection signals (having correlation indices lower than the aforesaid threshold correlation value), which are analysed by the controller module 23 to enable the sending of the control data to the actuator block 20.

The present method then comprises a step of controlling the light source 2 connected to the control device 3, carried out by means of the actuator block 20, which receives in input the control data from the integrating block 19 and sends to the light source 2 corresponding control signals of the supply voltage and/or current of the light source 2.

Advantageously, in the step of controlling the light source 2, the actuator block 20 receives the detection signals acquired in the acquisition steps (from the detection devices 4, 5 and 10) to parameterize the control data received from the controller module 23. More in detail, preferably, the actuator block 20 compares the values of the detection signals with determined control parameters in order to decide the amount of intensity increase or decrease of the light of the light source 2.

Advantageously, the present method comprises a step of sending transmission signals from each control device 3 to other control devices 3 of the apparatus 1 in order to allow the exchange of information between the control devices 3 themselves.

In such sending step, the actuator block 20 of each control device 3, by means of its own transmission module 29, receives the control data from the respective integrating block 19 and the detection signals from the respective detection devices 4, 5, 10, and sends corresponding first control data to the respective communication unit 25, which consequently sends the corresponding transmission signals to the communication units 25 of other control devices 3 of the apparatus 1.

In addition, the present method comprises a step of receiving the control signals, in which the communication unit 25 of each control device 3 receives the transmission signals sent by the communication units 25 of other control devices 3, and sends corresponding second control data to the respective actuator block 20.

The step of controlling the light source 2, obtained by means of the actuator block 20, comprises a stage of associating the control data and the second control data (sent to the actuator block 20) with corresponding priority levels, such association stage obtained by means of the aforesaid identifier module 30 of the actuator block 20 itself.

In addition, the step of controlling the light source 2 comprises a selection stage, in which the selector module 31 of the actuator block 20 selects, from among the control data and the second control data sent to the actuator block 20 itself, a group of data having the highest priority level.

In addition, a stage is provided of sending, to the light source 2, control signals corresponding to the group of data selected in the aforesaid selection stage, in which the control module 32 of the actuator block 20 controls the respective light source 2 to emit light as a function of the information of the group of data selected in the selection stage, and for example identifying an emergency event (in accordance with the previously described example).

The invention thus described therefore attains the pre-established objects.

In particular, the arrangement of the integrating block 19 of the electronic processing unit 18 with the validating 21, combining 22 and controller 23 modules, according to the present invention, allows efficiently managing the operation of the light sources 2, treating the information provided by the detection devices 4, 5, 10 in an integrated manner, even in the presence of a high number of detection signals sent by the latter.

In addition, advantageously, the arrangement of the communication unit 25 with Mesh interface module and of the actuator block 20 with the transmission 29, identifier 30, selector 31 and control 32 modules allows each control device 3 to regulate the operation of the corresponding light source 2 also as a function of the information detected by other control devices 3 of the apparatus 1, further increasing the efficiency of the present apparatus 1.

## Claims

1. Apparatus (1) for controlling a lighting system, comprising:
- at least one control device (3) suitable for being connected to at least one corresponding light source (2) of said system for controlling the operation of said light source (2);
- at least one image detection device (4), which is suitable for taking images of an area around said light source (2), is operatively connected to said control device (3) and is suitable for sending to the latter first detection signals containing said images;
- at least one environment detection device (5) selected from a first family of devices comprising one or more of the following devices: a light sensor (6), a temperature sensor (7), a humidity sensor (8), a CO₂ sensor (9);
said environment detection device (5) being suitable for detecting measurements of environmental parameters of the area around said light source (2), being operatively connected to said control device (3) and being suitable for sending to the latter second detection signals containing said measurements;
- at least one presence detection device (10) selected from a second family of devices comprising one or more of the following devices: a vibration sensor (11), a device for receiving radio waves (12), a radar (13);
said presence detection device (10) being suitable for detecting the presence of at least one object in the area around said light source (2), being operatively connected to said control device (3) and being suitable for sending to the latter third detection signals indicative of said presence;
said control device (3) comprising at least one electronic processing unit (18) equipped with:
- at least one integrating block (19), which is suitable for receiving in input said first, second and third detection signals, and is suitable for providing in output corresponding control data;
- at least one actuator block (20), which is suitable for receiving in input said control data from said integrating block (19) and is suitable for sending to said light source (2) corresponding control signals of the supply voltage and/or current of said light source (2);
said apparatus (1) being **characterised in that** said integrating block (19) comprises:
- at least one validating module (21), which is suitable for receiving said first, second and third detection signals, is suitable for calculating at least one correlation index between two or more of said detection signals, is suitable for comparing said correlation index with at least one determined threshold correlation value, and is suitable for selecting a first group of said detection signals having a correlation index higher than said threshold value;
- at least one combining module (22), which is suitable for receiving said first group of detection signals from said validating module (21), is suitable for dividing the detection signals of said first group into classes indicative of corresponding determined events, and is suitable for providing identification data corresponding to said events; said combining module (22) being suitable for processing the detection signals of said first group and providing in output said identification data containing high-level information accompanied by a degree of probability of the identified event;
- at least one controller module (23), which is suitable for receiving from said combining module (22) said identification data, and is suitable for providing said actuator block (20) with said control data corresponding to said identification data.

2. Apparatus (1) for controlling a lighting system according to claim 1, **characterised in that** said validating module (21) is suitable for selecting a second group of said detection signals having correlation index lower than said threshold correlation value, and is suitable for sending said second group of signals to said controller module (23), which is suitable for analysing said second group of signals to enable the sending of said control data to said actuator block (20).

3. Apparatus (1) for controlling a lighting system according to claim 1 or 2, **characterised in that** said integrating block (19) comprises a pre-processing module (24), which is suitable for receiving said detection signals and is suitable for emitting said detection signals in output in transformed form containing information indicative of said detections acquired by said detection devices (4, 5, 10).

4. Apparatus (1) for controlling a lighting system according to any one of the previous claims, **characterised in that** said presence detection device (10) is a device for receiving radio waves (12) selected from a third family of devices comprising one or more of the following devices: a WiFi receiving device (14), a Bluetooth receiving device (15), a RFID/NFC receiving device (16), a LR-WPAN receiving device (17).

5. Apparatus (1) for controlling a lighting system according to any one of the previous claims, **characterised in that** said control device (3) comprises a communication unit (25) connected to said electronic processing unit (18) and suitable at least for sending said detection signals and said identification data to at least one remote unit (26, 27, 28).

6. Apparatus (1) for controlling a lighting system according to claim 5, **characterized in that** said communication unit (25) is equipped with a Mesh interface module by means of which said control device (3) is suitable for communicating with at least one other control device (3) of said apparatus (1);
the actuator block (20) of said electronic processing unit (18) being equipped with a transmission module (29) suitable for receiving said control data from said integrating block (19) and said detection signals from said detection devices (4, 5, 10), and suitable for sending corresponding first control data to said communication unit (25), which, by means of said Mesh interface module, is suitable for sending corresponding transmission signals to the communication unit (25) of said at least one other control device (3) of said apparatus (1);
the communication unit (25) of said control device (3) being suitable for receiving said transmission signals sent from the communication unit (25) of said at least one other control device (3) and for sending, to said actuator block (20), corresponding second control data;
said actuator block (20) comprising:
- a identifier module (30) suitable for receiving said control data from said integrating block (19) and said second control data from said communication unit (25), and suitable for associating, with said data, corresponding priority levels;
- a selector module (31) suitable for selecting, from said control data and from said second control data, a group of data having the highest priority level;
- a control module (32) suitable for receiving said group of data selected by said selector module (31), and for sending, to said light source (2), corresponding said control signals.

7. Method for controlling a lighting system, comprising the following operative steps:
- a first step of acquiring first image detection signals through at least one image detection device (4);
- a second step of acquiring second detection signals of measurements of environment parameters through at least one environment detection device (5);
- a third step of acquiring third detection signals of the presence of at least one object through at least one presence detection device (10);
- a step of integrating said first, second and third detection signals, carried out through an integrating block (19) of an electronic processing unit (18) of a control device (3), said integrating block (19) receiving in input said first, second and third detection data, and supplying in output corresponding control data;
- a step of controlling at least one light source (2) of said system connected to said control device (3), carried out through at least one actuator block (20), which receives in input said control data from said integrating block (19) and sends to said light source (2) corresponding control signals of the supply voltage and/or current of said light source (2);
said method being **characterised in that** said integration step comprises:
- a stage of calculating at least one correlation index between two or more of said first, second and third detection signals, carried out through a validating module (21) of said integrating block (19);
- a stage of comparing said correlation index with at least one determined threshold correlation value, carried out through said validating module (21);
- a first stage of selecting a first group of said detection signals having correlation index greater than said threshold correlation value, carried out through said validating module (21);
- a stage of dividing the detection signals of said first group into classes indicative of determined corresponding events, carried out through a combining module (22) of said integrating block (19);
- a stage of generating identification data corresponding to said events, carried out through said combining module (22); said combining module (22) processing the detection signals of said first group and providing in output said identification data containing high-level information accompanied by a degree of probability of the identified event;
- a stage of generating said control data corresponding to said identification data, carried out through a controller module (23) of said integrating block (19).

8. Method for controlling a lighting system according to claim 7, **characterised in that** said integration step comprises a second selection stage of a second group of said detection signals having correlation index lower than said threshold value;
in said stage of generating the control data, said controller module (23) receiving from said validating module (21) said second group of detection signals, which are analysed by said controller module (23) to enable the sending of said control data to said actuator block (20).

9. Method for controlling a lighting system according to claim 7 or 8, **characterised in that**, in said step of controlling the light source (2), said actuator block (20) receives said detection signals acquired in said acquisition steps to parameterize said control data.

10. Method for controlling a lighting system according to any one of the previous claims 7 to 9, **characterised in that** said integration step comprises a stage of pre-processing said detection signals, through a pre-processing module (24) of said integrating block (19), said pre-processing module (24) providing in output said detection signals in transformed form containing information indicative of the detections made by said detection devices (4, 5, 10).

11. Method for controlling a lighting system according to claim 8, **characterised in that** the stages of selecting said integration step are obtained through an unsupervised classification method.

12. Method for controlling a lighting system according to any one of the preceding claims from 7 to 11, **characterized in that** it comprises:
- a step of sending transmission signals from said control device (3) to at least one other control device (3) of said apparatus (1), wherein said actuator block (20) of said control device (3) receives said control data from said integrating block (19) and said detection signals from said detection devices (4, 5, 10), and sends corresponding first control data to a communication unit (25) of said control device (3), such communication unit (25) sending corresponding transmission signals to the communication unit (25) of said at least one other control device (3) of said apparatus (1);
- a step of receiving control signals, wherein the communication unit (25) of said control device (3) receives said transmission signals sent from the communication unit (25) of said at least one other control device (3) and sends to said actuator block (20) corresponding second control data;
said step of controlling said at least one light source (2) comprising:
- a stage of associating corresponding priority levels to said control data and to said second control data;
- a stage of selecting, from among said control data and said second control data, at least one group of data having the highest priority level;
- a stage of sending, to said light source (2) of said control signals, corresponding to said group of data selected in said selection stage.

## Patentansprüche

1. Vorrichtung (1) zur Steuerung eines Beleuchtungssystems, das Folgendes umfasst:
- mindestens eine für den Anschluss an mindestens eine entsprechende Lichtquelle (2) des genannten Systems zur Steuerung des Betriebs der genannten Lichtquelle (2) geeignete Steuervorrichtung (3);
- mindestens eine Bilderkennungsvorrichtung (4), die geeignet ist, Bilder eines Bereichs um die genannte Lichtquelle (2) herum aufzunehmen, operativ an die genannte Steuervorrichtung (3) angeschlossen und geeignet ist, an Letztere erste, die genannten Bilder enthaltende Erkennungssignale zu senden;
- mindestens eine Umfelderkennungsvorrichtung (5), die aus einer ersten Gerätefamilie ausgewählt wurde, die eine oder mehrere der folgenden Vorrichtungen umfasst: einen Lichtsensor (6), einen Temperatursensor (7), einen Feuchtigkeitssensor (8), einen CO₂-Sensor (9);
wobei die genannte Umfelderkennungsvorrichtung (5) geeignet ist, Messungen von Umgebungsparametern des Bereichs um die genannte Lichtquelle (2) herum zu erkennen, die operativ an die genannte Steuervorrichtung (3) angeschlossen und geeignet ist, an Letztere zweite, die genannten Messungen enthaltende Erkennungssignale zu senden;
- mindestens eine Anwesenheitserkennungsvorrichtung (10), die aus einer zweiten Gerätefamilie ausgewählt wurde, die eine oder mehrere der folgenden Vorrichtungen umfasst: einen Vibrationssensor (11), eine Vorrichtung zum Empfangen von Funkwellen (12), einen Radar (13);
wobei die genannte Anwesenheitserkennungsvorrichtung (10) geeignet ist, die Anwesenheit mindestens eines Gegenstands in dem Bereich um die genannte Lichtquelle (2) herum zu erkennen, die operativ an die genannte Steuervorrichtung (3) angeschlossen und geeignet ist, an Letztere dritte, auf die genannte Anwesenheit enthaltende Erkennungssignale zu senden;
wobei die genannte Steuervorrichtung (3) mindestens eine elektronische Verarbeitungseinheit (18) umfasst, die mit Folgendem ausgestattet ist:
- mindestens einem integrierenden Block (19), der geeignet ist, im Eingang die genannten ersten, zweiten und dritten Erkennungssignale zu empfangen und geeignet ist, im Ausgang entsprechende Steuerdaten zur Verfügung zu stellen;
- mindestens einen Antriebsblock (20), der geeignet ist, die genannten Steuerdaten von dem genannten integrierenden Block (19) im Eingang zu empfangen und geeignet ist, entsprechende Steuersignale der Versorgungsspannung und/oder des Versorgungsstroms der genannten Lichtquelle (2) an die genannten Lichtquelle (2) zu senden;
wobei diese Vorrichtung (1) **dadurch gekennzeichnet ist, dass** der genannte integrierende Block (19) Folgendes umfasst:
- mindestens ein Validierungsmodul (21), das geeignet ist, die genannten ersten, zweiten und dritten Erkennungssignale zu empfangen, mindestens einen Korrelationsindex zwischen zwei oder mehreren der genannten Erkennungssignale zu berechnen, den genannten Korrelationsindex mit mindestens einem festgelegten Schwellenwert zu vergleichen und eine erste Gruppe der genannten Erkennungssignale mit einem
Korrelationsindex über dem genannten
Schwellenwert auszuwählen;
- mindestens ein kombinierendes Modul (22), das geeignet ist, die genannte erste Gruppe von Erkennungssignalen von dem genannten Validierungsmodul (21) zu empfangen, die Erkennungssignale der genannten ersten Gruppe in auf die entsprechenden festgestellten Ereignisse hinweisende Klassen zu unterteilen und den genannten Ereignissen entsprechende Identifikationsdaten zur Verfügung zu stellen; wobei das genannte kombinierende Modul (22) geeignet ist, die Erkennungssignale der genannten ersten Gruppe zu verarbeiten und im Ausgang die genannten hochrangige Informationen enthaltenden Identifikationsdaten begleitet von einem Wahrscheinlichkeitsgrad des identifizierten Ereignisses zur Verfügung zu stellen;
- mindestens ein Steuerungsmodul (23), das geeignet ist, die genannten Identifikationsdaten von dem genannten kombinierenden Modul (22) zu erhalten und dem genannten Antriebsblock
(20) mit den genannten den genannten Identifizierungsdaten entsprechenden Steuerdaten zur Verfügung zu stellen.

2. Vorrichtung (1) zur Steuerung eines Beleuchtungssystems nach Anspruch 1, **dadurch gekennzeichnet, dass** das genannte Validierungsmodul (21) geeignet ist, eine zweite Gruppe der genannten Erkennungssignale mit einem Korrelationsindex unter dem genannten Korrelationsschwellenwert auszuwählen und geeignet ist, die genannte zweite Signalgruppe an das genannte Steuerungsmodul (23) zu senden, das geeignet ist, die genannte zweite Signalgruppe zu analysieren, um die Übertragung der genannten Steuerdaten an den genannten Antriebsblock (20) zu aktivieren.

3. Vorrichtung (1) zur Steuerung eines Beleuchtungssystems nach Anspruch 1 oder 2, **dadurch gekennzeichnet, dass** der genannte ergänzende Block (19) ein Vorverarbeitungsmodul (24) umfasst, das geeignet ist, die genannten Erkennungssignale zu erfassen und die genannten Erkennungssignale im Ausgang in umgewandelter Form auszugeben, in der sie Informationen enthalten, die auf die genannten von den genannten Erkennungsvorrichtungen (4, 5, 10) erfassten Erkennungen hinweisen.

4. Vorrichtung (1) zur Steuerung eines Beleuchtungssystems nach einem beliebigen der vorangegangenen Ansprüche, **dadurch gekennzeichnet, dass** es sich bei der genannten Anwesenheitserkennungsvorrichtung (10) um eine
Vorrichtung für den Empfang von Funkwellen (12) handelt, die aus einer dritten Gerätefamilie ausgewählt wurde, die ein oder mehrere der folgenden Vorrichtungen umfasst: eine Wi-Fi-Empfangsvorrichtung (14), eine Bluetooth-Empfangsvorrichtung (15), eine RFID/NFC-Empfangsvorrichtung (16), eine LRWPAN-Empfangsvorrichtung (17).

5. Vorrichtung (1) zur Steuerung eines Beleuchtungssystems nach einem der vorangegangenen Ansprüche, **dadurch gekennzeichnet, dass** die genannte Steuervorrichtung (3) eine an die genannte elektronische Verarbeitungseinheit (18) angeschlossene Kommunikationseinheit (25) umfasst, die mindestens geeignet ist, die genannten Erkennungssignale und genannten Identifikationsdaten an mindestens eine Ferneinheit (26, 27, 28) zu übertragen.

6. Vorrichtung (1) zur Steuerung eines Beleuchtungssystems nach Anspruch 5, **dadurch gekennzeichnet, dass** die genannte Kommunikationseinheit (25) mit einem Netzschnittstellenmodul ausgestattet ist, mit dem die genannte Steuervorrichtung (3) für die Kommunikation mit mindestens einer weiteren Steuervorrichtung (3) der genannten Vorrichtung (1) geeignet ist;
wobei der Antriebsblock (20) der genannten elektronischen Verarbeitungseinheit (18) mit einem Übertragungsmodul (29) ausgestattet ist, dass für den Empfang der genannten Steuerdaten von dem genannten integrierenden Block (19) und den genannten Erkennungssignalen von den genannten Erkennungsvorrichtungen (4, 5, 10) geeignet ist und geeignet ist, die entsprechenden ersten Steuerdaten an die genannte Kommunikationseinheit (25) zu übertragen, die mittels des genannten Netzschnittstellenmoduls geeignet ist, die entsprechenden Übertragungssignale an die Kommunikationseinheit (25) der genannten mindestens einen weiteren Steuervorrichtung (3) der genannten Vorrichtung (1) zu senden;
wobei die Kommunikationseinheit (25) der genannten Steuervorrichtung (3) geeignet ist, die von der Kommunikationseinheit (25) der genannten mindestens einen weiteren Steuervorrichtung (3) versandten Übertragungssignale zu empfangen und an den genannten Antriebsblock (20) entsprechende zweite Steuerdaten zu senden;
wobei der genannte Antriebsblock (20) Folgendes umfasst:
- ein Identifizierungsmodul (30), das geeignet ist, die genannten Steuerdaten von dem genannten integrierenden Block (19) und die genannten zweiten Steuerdaten von der genannten Kommunikationseinheit (25) zu empfangen und den genannten Daten die entsprechenden Prioritätsniveaus zuzuordnen;
- ein Wählermodul (31), das geeignet ist, aus den genannten Steuerdaten und aus den genannten zweiten Steuerdaten eine Datengruppe mit dem höchsten Prioritätsniveau auszuwählen;
- ein Steuermodul (32), das geeignet ist, die genannte von dem genannten Wählermodul (31) ausgewählte Datengruppe zu empfangen und die entsprechenden genannten Steuersignale an die genannte Lichtquelle (2) zu übertragen.

7. Verfahren zur Steuerung eines Beleuchtungssystems, das die folgenden Arbeitsschritte umfasst:
- einen ersten Schritt zum Erfassen der ersten Bilderkennungssignale über mindestens eine Bilderkennungsvorrichtung (4);
- einen zweiten Schritt der Erfassung zweiter Erkennungssignale von Messungen von Umgebungsparametern über mindestens eine Umfelderkennungsvorrichtung (5);
- einen dritten Schritt der Erfassung dritter Erkennungssignale der Anwesenheit mindestens eines Gegenstands über mindestens eine Anwesenheitserkennungsvorrichtung (10);
- einen Schritt der Integrierung der genannten ersten, zweiten und dritten Erkennungssignale, ausgeführt über einen integrierenden Block (19) einer elektronischen Verarbeitungseinheit (18) einer Steuervorrichtung (3), wobei der genannte integrierende Block (19) im Eingang die genannten ersten, zweiten und dritten Erkennungsdaten empfängt und im Ausgang die entsprechenden Steuerdaten liefert;
- einen Schritt der Steuerung mindestens einer Lichtquelle (2) des genannten an die genannte Steuervorrichtung (3) angeschlossenen Systems, ausgeführt über mindestens einen Antriebsblock (20), der im Eingang die genannten Steuerdaten von dem genannten integrierenden Block (19) empfängt und an die genannte Lichtquelle (2) entsprechende Steuersignale der Spannungsversorgung und/oder Stromversorgung der genannten Lichtquelle (2) überträgt;
wobei das genannte Verfahren **dadurch gekennzeichnet ist, dass** der genannte Integrierungsschritt Folgendes umfasst:
- einen Schritt der Berechnung mindestens eines Korrelationsindexes zwischen zwei oder mehreren der genannten ersten, zweiten und dritten Erkennungssignale, ausgeführt über ein Validierungsmodul (21) des genannten integrierenden Blocks (19);
- einen Schritt des Vergleichs des genannten Korrelationsindexes mit mindestens einem festgelegten Korrelationsschwellenwert, ausgeführt über das genannten Validierungsmodul (21);
- einen ersten Schritt der Auswahl einer ersten Gruppe der genannten Erkennungssignale mit einem größeren Korrelationsindex als der genannte Korrelationsschwellenwert, ausgeführt über das genannten Validierungsmodul (21);
- einen Schritt der Unterteilung der Erkennungssignale der genannten ersten Gruppe in auf bestimmte entsprechende Ereignisse hinweisende Klassen, ausgeführt über ein kombinierendes Modul (22) des genannten integrierenden Blocks (19);
- einen Schritt der Erstellung von den genannten Ereignissen entsprechenden Identifizierungsdaten, ausgeführt über das genannte kombinierende Modul (22); wobei das genannte kombinierende Modul (22) die Erkennungssignale der genannten ersten Gruppe verarbeitet und im Ausgang die genannten hochrangige Informationen enthaltenden Identifizierungsdaten begleitet von einem Wahrscheinlichkeitsgrad des festgestellten Ereignisses zur Verfügung stelle;
- einen Schritt der Erstellung der genannten den genannten Identifizierungsdaten entsprechenden Steuerdaten, ausgeführt über ein Steuerungsmodul (23) des genannten integrierenden Blocks (19).

8. Verfahren zur Steuerung eines Beleuchtungssystems nach Anspruch 7, **dadurch gekennzeichnet, dass** der genannte Integrierungsschritt einen zweiten Schritt zur Auswahl einer zweiten Gruppe der genannten Erkennungssignale umfasst, deren Korrelationsindex unter dem genannten Schwellenwert liegt.
wobei bei diesem genannten Schritt der Erstellung der Steuerdaten das genannte Steuerungsmodul (23) von dem genannten Validierungsmodul (21) die genannte zweite Gruppe Erkennungssignale empfängt, die von dem genannten Steuerungsmodul (23) analysiert werden, um die Übertragung der genannten Steuerdaten an den genannten Antriebsblock (20) zu aktivieren.

9. Verfahren zur Steuerung eines Beleuchtungssystems nach Anspruch 7 oder 8, **dadurch gekennzeichnet, dass** bei dem genannten Schritt der Steuerung der Lichtquelle (2) der genannte Antriebsblock (20) die bei den genannten Erfassungsschritten erfassten genannten Erkennungssignale empfängt, um die genannten Steuerdaten zu parametrisieren.

10. Verfahren zur Steuerung eines Beleuchtungssystems nach einem beliebigen der vorangegangenen Ansprüche 7 bis 9, **dadurch gekennzeichnet, dass** der genannte Integrierungsschritt einen Schritt der Vorverarbeitung der genannten Erkennungssignale über ein Vorverarbeitungsmodul (24) des genannten integrierenden Blocks (19) umfasst, wobei das genannte Vorverarbeitungsmodul (24) im Ausgang die genannten Erkennungssignale in umgewandelter Form zur Verfügung stellt, in der sie auf die durch die genannten Erkennungsvorrichtungen (4, 5, 10) erfolgten Erkennungen hinweisende Informationen enthalten.

11. Verfahren zur Steuerung eines Beleuchtungssystems nach Anspruch 8, **dadurch gekennzeichnet, dass** die Schritte der Auswahl des genannten Integrierungsschritts über ein nicht überwachtes Klassifizierungsverfahren erzielt werden.

12. Verfahren zur Steuerung eines Beleuchtungssystems nach einem beliebigen der vorstehenden Ansprüche 7 bis 11, **dadurch gekennzeichnet, dass** es Folgendes umfasst:
- einen Schritt des Versands von Übertragungssignalen von der genannten Steuervorrichtung (3) an mindestens eine weitere Steuervorrichtung (3) der genannten Vorrichtung (1), bei dem der genannte Antriebsblock (20) der genannten Steuervorrichtung (3) die genannten Steuerdaten von dem genannten integrierenden Block (19) und die genannten Erkennungssignale von den genannten Erkennungsvorrichtungen (4, 5, 10) erhält und entsprechende erste Steuerdaten an eine Kommunikationseinheit (25) der genannten Steuervorrichtung (3) überträgt und diese Kommunikationseinheit (25) entsprechende Übertragungssignale an die Kommunikationseinheit (25) der genannten mindestens einen Steuervorrichtung (3) der genannten Vorrichtung (1) überträgt;
- einen Schritt des Empfangs von Steuersignalen, wobei die Kommunikationseinheit (25) der genannten Steuervorrichtung (3) von der Kommunikationseinheit (25) der genannten mindestens einen weiteren Steuervorrichtung (3) versandten Übertragungssignale empfängt und an den genannten Antriebsblock (20) entsprechende zweite Steuerdaten versendet; wobei der genannte Schritt der Steuerung der genannten mindestens einen Lichtquelle (2) Folgendes umfasst:
- einen Schritt der Vergabe entsprechender Prioritätsniveaus an die genannten Steuerdaten und die genannten zweiten Steuerdaten;
- einen Schritt der Auswahl mindestens einer Datengruppe mit dem höchsten Prioritätsniveau unter den genannten Steuerdaten und den genannten zweiten Steuerdaten;
- einen Schritt der Übertragung der genannten Steuersignale an die genannte Lichtquelle (2), die der genannten bei dem genannten Auswahlschritt ausgewählten Datengruppe entsprechen.

## Revendications

1. Appareil (1) pour surveiller un système d'éclairage comprenant :
- au moins un dispositif de surveillance (3) apte à être connecté à au moins une source de lumière correspondante (2) dudit système pour surveiller le fonctionnement de ladite source de lumière (2) ;
- au moins un dispositif de détection d'images (4), apte à prendre des images d'une zone autour de ladite source de lumière (2), est relié de façon active audit dispositif de surveillance (3) et apte à transmettre à ce dernier des premiers signaux de détection contenant lesdites images ;
- au moins un dispositif de détection environnementale (5) sélectionné dans une première famille de dispositifs comprenant un ou plusieurs des dispositifs suivants : un capteur de lumière (6), une sonde de température (7), un capteur d'humidité (8) un capteur de CO₂ (9) ;
ledit dispositif de détection environnementale (5) étant apte à détecter les mesures de paramètres environnementaux de la zone autour de ladite source de lumière (2), étant relié de façon active audit dispositif de surveillance (3) et étant apte à transmettre à ce dernier des deuxièmes signaux de détection contenant lesdites mesures ;
- au moins un dispositif de détection de présence (10) sélectionné dans une deuxième famille de dispositifs comprenant un ou plusieurs des dispositifs suivants : un capteur de vibrations (11), un dispositif pour la réception d'ondes radio (12), un radar (13) ;
ledit dispositif de détection de présence (10) étant apte à détecter la présence d'au moins un objet dans la zone autour de ladite source de lumière (2), étant relié de façon active audit dispositif de surveillance (3) et étant apte à transmettre à ce dernier des troisièmes signaux de détection indicatifs de ladite présence ;
ledit dispositif de surveillance (3) comprenant au moins une unité de traitement électronique (18) équipée de :
- au moins un bloc intégrant (19), apte à recevoir en entrée lesdits premiers, deuxièmes et troisièmes signaux de détection et apte à fournir en sortie des données de surveillance correspondantes ;
- au moins un bloc actionneur (20), apte à recevoir en entrée lesdites données de surveillance dudit bloc intégrant (19) et apte à transmettre à ladite source de lumière (2) des signaux de surveillance correspondants de la tension et/ou courant d'alimentation de ladite source de lumière (2) ;
Ledit appareil (1) étant **caractérisé en ce que** ledit bloc intégrant (19) comprend :
- au moins un module de validation (21), apte à recevoir lesdits premiers, deuxièmes et troisièmes signaux de détection, apte à calculer au moins un indice de corrélation entre deux ou plusieurs desdits signaux de détection, apte à comparer ledit indice de corrélation avec au moins une valeur de corrélation de seuil déterminée et apte à sélectionner un premier groupe desdits signaux de détection ayant un indice de corrélation supérieur à ladite valeur de seuil ;
- au moins un module combinant (22), apte à recevoir ledit premier groupe de signaux de détection dudit module de validation (21), apte à diviser les signaux de détection dudit premier groupe en classes indicatives d'événements déterminés correspondants et apte à fournir des données d'identification auxdits événements ; ledit module combinant (22) étant apte à traiter les signaux de détection dudit premier groupe et à fournir en sortie lesdites données d'identification contenant des informations de haut niveau accompagnées d'un degré de probabilité de l'événement identifié ;
- au moins un module de surveillance (23), apte à recevoir dudit module combinant (22) lesdites données d'identification et apte à fournir audit bloc actionneur (20) lesdites données de surveillance correspondant auxdites données d'identification.

2. Appareil (1) pour surveiller un système d'éclairage selon la revendication 1, **caractérisé en ce que** ledit module de validation (21) est apte à sélectionner un deuxième groupe desdits signaux de détection ayant un indice de corrélation inférieur à la valeur de corrélation de seuil et est apte à transmettre ledit deuxième groupe de signaux audit module de surveillance (23) qui est apte à analyser ledit deuxième groupe de signaux pour activer la transmission desdites données de surveillance audit bloc actionneur (20).

3. Appareil (1) pour surveiller un système d'éclairage selon la revendication 1 ou 2, **caractérisé en ce que** ledit bloc intégrant (19) comprend un module de prétraitement (24), apte à recevoir lesdits signaux de détection et apte à émettre lesdits signaux de détection en sortie en forme transformée contenant des indications indicatives desdites détections acquises par lesdits dispositif de détection (4, 5, 10).

4. Appareil (1) pour surveiller un système d'éclairage selon l'une quelconque des revendications précédentes, **caractérisé en ce que** ledit dispositif de détection de présence (10) est un dispositif pour la réception d'ondes radio (12) sélectionné dans une troisième famille de dispositifs comprenant un ou plusieurs des dispositifs suivants : un dispositif de réception WiFi (14), un dispositif de réception Bluetooth (15) un dispositif de réception RFID/NFC (16), un dispositif de réception LR-WPAN (17).

5. Appareil (1) pour surveiller un système d'éclairage selon l'une quelconque des revendications précédentes, **caractérisé en ce que** ledit dispositif de surveillance (3) comprend une unité de communication (25) connectée à ladite unité de traitement électronique (18) et apte au moins à transmettre lesdits signaux de détection et lesdites données d'identification à au moins une unité distante (26, 27, 28).

6. Appareil (1) pour surveiller un système d'éclairage selon la revendication 5, **caractérisé en ce que** ladite unité de communication (25) est équipée d'un module d'interface Mesh par le biais duquel ledit dispositif de surveillance (3) est apte à communiquer avec au moins un autre dispositif de surveillance (3) dudit appareil ;
le bloc actionneur (20) de ladite unité de traitement électronique (18) étant équipé d'un module de transmission (29) apte à recevoir lesdites données de surveillance dudit bloc intégrant (19) et lesdits signaux de détections desdits dispositifs de détection (4, 5, 10), et apte à transmettre des premières données de surveillance correspondantes à ladite unité de communication (25), laquelle, par le biais dudit module d'interface Mesh est apte à transmettre des signaux de transmission correspondant à l'unité de communication (25) dudit au moins un dispositif de surveillance (3) dudit appareil (1) ;
l'unité de communication (25) dudit dispositif de surveillance (3) étant apte à recevoir lesdits signaux de transmission envoyés par l'unité de communication (25) dudit au moins un dispositif de surveillance (3) et à transmettre audit bloc actionneur (20), des deuxièmes données de surveillance correspondantes ;
ledit bloc actionneur (20) comprenant :
- un module d'identification (30) apte à recevoir lesdites données de surveillance dudit bloc intégrant (19) et lesdites deuxièmes données de surveillance de ladite unité de communication (25) et apte à associer auxdites données des niveaux correspondants de priorité ;
- un module sélecteur (31) apte à sélectionner, parmi lesdites données de surveillance et lesdites deuxièmes données de surveillance un groupe de données ayant le plus haut niveau de priorité ;
- un module de surveillance (32) apte à recevoir ledit groupe de données sélectionnées par ledit module sélecteur (31), et pour transmettre à ladite source de lumière (2) lesdits signaux de surveillance.

7. Procédé pour surveiller un système d'éclairage, comprenant les étapes opérationnelles suivantes :
- une première étape d'acquisition de premiers signaux de détection d'image à travers au moins un dispositif de détection d'images (4) ;
- une deuxième étape d'acquisition de deuxièmes signaux de mesure de paramètres environnementaux à travers au moins un dispositif de détection environnementale (5) ;
- une troisième étape d'acquisition de troisièmes signaux de détection de la présence d'au moins un objet à travers au moins un dispositif de détection de présence (10) ;
- un étape d'intégration desdits premiers, deuxièmes et troisièmes signaux, réalisée à travers un bloc intégrant (19) d'une unité de traitement électronique (18) d'un dispositif de surveillance (3), ledit bloc intégrant (19) recevant en entrée lesdites premières, deuxièmes et troisièmes données de détection et fournissant en sortie des données de surveillance correspondantes ;
- une étape de surveillance d'au moins une source de lumière (2) dudit système connectée audit dispositif de surveillance (3), réalisée au moyen d'au moins un bloc actionneur (20) qui reçoit en entrée lesdites données de surveillance dudit bloc intégrant (19) et transmet à ladite source de lumière (2) des signaux de surveillance correspondant de la tension et/ou courant d'alimentation de ladite source de lumière (2) ;
ledit procédé étant **caractérisé en ce que** ladite étape d'intégration comprend :
- une phase de calcul d'au moins un indice de corrélation entre deux ou plusieurs desdits premiers, deuxièmes et troisièmes signaux de détection à travers un module de validation (21) dudit bloc intégrant (19) ;
- une phase de comparaison dudit indice de corrélation avec au moins une valeur de corrélation de seuil déterminée, réalisée à travers ledit module de validation (21) ;
- une première phase de sélection d'un premier groupe desdits signaux de détection ayant un indice de corrélation supérieur à ladite valeur de corrélation de seuil, réalisée à travers le module de validation (21) ;
- une phase de division des signaux de détection dudit premier groupe en classes indicatives d'événements correspondants déterminés, réalisée à travers un module combinant (22) dudit bloc intégrant (19) ;
- une phase de génération de données d'identification correspondant auxdits événements, réalisée à travers ledit module combinant (22) ; ledit module combinant (22) traitant les signaux de détection dudit premier groupe et fournissant en sortie lesdites données d'identification contenant informations de haut niveau accompagnées par un degré de probabilité de l'événement identifié ;
- une phase de génération desdites données de surveillance correspondant auxdites données d'identification, réalisée à travers un module de surveillance (23) dudit bloc intégrant (19).

8. Procédé pour surveiller un système d'éclairage selon la revendication 7, **caractérisé en ce que** ladite étape d'intégration comprend une deuxième phase de sélection d'un deuxième groupe desdits signaux de détection ayant un indice de corrélation inférieur à la valeur de seuil ;
dans ladite phase de génération des données de surveillance, ledit module de surveillance (23) recevant dudit module de validation (21) ledit deuxième groupe de signaux de détection, qui sont analysés par ledit module de surveillance (23) pour activer la transmission desdites données de surveillance audit bloc actionneur (20).

9. Procédé pour surveiller un système d'éclairage selon la revendication 7 ou 8, **caractérisé en ce que** dans ladite phase de surveillance de la source de lumière (2), ledit bloc actionneur (20) reçoit lesdits signaux de détection acquis dans lesdites étapes d'acquisition pour le paramétrage desdites données de surveillance.

10. Procédé pour surveiller un système d'éclairage selon l'une quelconque des revendications précédentes 7 à 9, **caractérisé en ce que** ladite étape d'intégration comprend une phase de prétraitement à travers un module de prétraitement (24) dudit bloc intégrant (19), ledit module de prétraitement (24) fournissant en sortie lesdits signaux de détection en forme transformée contenant des informations indicatives des détections effectuées par lesdits dispositifs de détection (4, 5, 10).

11. Procédé pour surveiller un système d'éclairage selon la revendication 8, **caractérisé en ce que** les phases de sélections de ladite étape d'intégration sont obtenues par un procédé de classification sans surveillance.

12. Procédé pour surveiller un système d'éclairage selon l'une quelconque des revendications précédentes 7 à 11, **caractérisé en ce qu'**il comprend :
- une étape de transmission de signaux de transmission dudit dispositif de surveillance (3) à au moins un autre dispositif de surveillance (3) dudit appareil (1), dans lequel ledit bloc actionneur (20) dudit dispositif de surveillance (3) reçoit lesdites données de surveillance dudit bloc intégrant (19) et lesdits signaux de détection desdits dispositifs de détection (4, 5, 10) et transmet des premières données de surveillance correspondantes à une unité de communication (25) dudit dispositif de surveillance (3), telle unité de communication (25) transmettant des signaux de transmission correspondants à l'unité de communication (25) dudit au moins un autre dispositif de surveillance (3) dudit appareil (1) ;
- une étape de réception de signaux de surveillance, dans laquelle l'unité de communication (25) dudit dispositif de surveillance (3) reçoit lesdits signaux de transmission envoyés par l'unité de communication (25) audit au moins un autre dispositif de surveillance (3) et transmet audit bloc actionneur (20) des deuxièmes données de surveillance correspondantes ;
ladite étape de surveillance contrôlant ladite au moins une source de lumière (2) comprenant :
- une phase d'association de niveaux correspondants de priorité auxdites données de surveillance et audites deuxièmes données de surveillance ;
- une phase de sélection, parmi lesdites données de surveillance et lesdites deuxièmes données de surveillance d'au moins un groupe de données ayant le plus haut niveau de priorité ;
- une phase de transmission à ladite source de lumière (2) desdits signaux de surveillance, correspondant audit groupe de données sélectionnées dans ladite phase de sélection.
